Europäisches Patentamt

European Patent Office

Office européen des brevets

(19)

(11) Publication number: **0 088 837**
**B1**

# (12) EUROPEAN PATENT SPECIFICATION

(45) Date of publication of patent specification: **10.07.85**

(51) Int. Cl.⁴: **H 04 B 1/44**

(21) Application number: **82301257.0**

(22) Date of filing: **12.03.82**

(54) **Radio transmitting and receiving apparatus.**

(43) Date of publication of application:
**21.09.83 Bulletin 83/38**

(45) Publication of the grant of the patent:
**10.07.85 Bulletin 85/28**

(84) Designated Contracting States:
**DE FR NL**

(56) References cited:
**DE-A-1 491 909**
**GB-A-1 480 418**
**US-A-4 082 919**

**PATENTS ABSTRACTS OF JAPAN, vol. 2, no.
120, 6th October 1978, page 7053E78**

(73) Proprietor: **Corrigan, Nigel Matthew
25 Hyde Park Gate
Seletar Singapore (GB)**

(72) Inventor: **Corrigan, Nigel Matthew
25 Hyde Park Gate
Seletar Singapore (GB)**

(74) Representative: **Loven, Keith James et al
Eric Potter & Clarkson 14 Oxford Street
Nottingham NG1 5BP (GB)**

Courier Press, Leamington Spa, England.

# Description

This invention relates to a radio transmitting and receiving apparatus and to a transmission control means for use in a radio transmitting and receiving apparatus. The apparatus is particularly applicable to aircraft voice communications.

Aircraft air-to-ground and ground-to-air voice radio communications take place within the VHF band. Airlines are equipped with dual VHF transmitter/receivers ("transceivers") allowing a choice of any two of 720 channels spaced at 25 kHz in the range 118 to 136 MHz, and ground facilities communicate with aircraft on any single channel in that range. It is, therefore, quite normal to have as many as eight aircraft with their transceivers operating on a single VHF channel, i.e. that of a ground facility such as air traffic control.

A problem which arises from such a situation is that if two transmitters operate at the same time on the same channel, any receivers tuned to that channel will receive either a jumble of words or a high pitched whistle. The operators of the two transmitters will be unaware that their transmissions are interfering one with the other. While this typically causes no more than a minor nuisance, with a request for each message to be repeated separately, it can cause messages to be misunderstood, with possibly disastrous consequences.

To overcome this type of problem, it has been proposed to include blocking means arranged to prevent transmission of a signal by the apparatus while a signal of predetermined strength is being received by the apparatus. Apparatus of this type is disclosed in British Patent Specification No. 1 480 418 in the name of Budapesti Radiotechnikai Gyar. However, in an emergency, or where it is apparent that another transmitter has been left operating in error, some means of over-riding the operation of the blocking means is required. In Budapesti U.K. Patent Specification No. 1 480 418, reference is made to switching the apparatus to an operational mode in which the blocking means is made ineffective. It will be apparent that such a provision might well render the provision of a blocking control circuit in radio transceivers ineffective as a way of overcoming the original problem of preventing interfering simultaneous transmissions, since it is possible that many transceivers would be left permanently switched to the operational mode in which the blocking means is ineffective, either by oversight or even deliberately. This is particularly true in the case of aircraft radio apparatus, where the inconvenience or even potential danger in having to operate a control on the transceiver set would dissuade aircrew from repeating the operation to cancel the over-ride when not required.

Accordingly, the present invention provides a simplex radio transmitting and receiving apparatus, comprising a selector switch, operation of which causes the apparatus to change from a receiving mode into a transmitting mode, transmission blocking means arranged to prevent selection of the transmitting mode if a signal of predetermined strength is being received by the apparatus at the time the selector switch is operated, and over-ride means whereby operation of the transmission blocking means may be selectively over-ridden to enable the transmitting mode to be selected, characterised in that the over-ride means is adapted to operate upon receipt of a control signal and to cease to operate when the receiving mode of the apparatus is again selected.

The control signal can be generated by repeated operation of the selector switch, or press-to-talk button, for example within a predetermined time interval, or by operation of a separate over-ride switch.

The blocking means may also be arranged to continue to prevent selection of the transmitting mode if the received signal ceases while the selector switch is being operated to select the transmitting mode, thereby preventing a user of the apparatus from gaining priority to transmit, when the existing transmission ceases, by holding the selector switch, or press-to-talk key, in the transmitting mode position.

The invention also provides a transmission control means for a simplex radio transmitting and receiving apparatus comprising a selector switch, operation of which causes the apparatus to change from a receiving mode into a transmitting mode, the control means comprising:

a switching means connectable between the selector switch and the transmitter control circuit of the apparatus; and

a detector connectable to the receiver circuit of the apparatus and operably connected to the switching means, whereby, when the detector detects a received signal in the receiver circuit of a predetermined strength, the switching means is operated to open the circuit between the selector switch and the transmitter control circuit until the signal is no longer detected;

characterised in that the control means also includes an over-ride circuit which comprises control signal detecting means, an over-ride control circuit, and mode-detecting means, the over-ride control circuit being activated by the control signal detecting means upon receipt of a control signal to over-ride operation of the switching means by the detector to close again the circuit between the selector-switch and the transmitter circuit, the mode-detecting means detecting the mode in which the apparatus is operating, and serving to de-activate the over-ride control circuit when a return to the receiving mode is detected.

An advantage of the apparatus of the invention is that it can only be operated to over-ride the transmission blocking means until the over-riding transmission is finished. The apparatus cannot be left in an over-ride mode.

The transmission control means of the invention can be readily installed in existing VHF transceivers and will not affect the operation of the VHF transceiver in any other way. As the necessary circuitry can be incorporated into a microelectronic circuit, the additional weight of the modified radio is negligible, an important factor in aircraft. If the control means fails for any reason to operate, the radio reverts to its former state, operating as if the device were not present. Modification of a single unit gives the aircraft the advantages of the invention even if no other unit on any other aircraft has been modified, without affecting the operation of any other radio. Any modification can be made within a removable radio unit outside the aircraft, with no alteration to aircraft wiring. Retraining of aircraft crews is not necessary, since operation of the modified units is essentially the same as before modification.

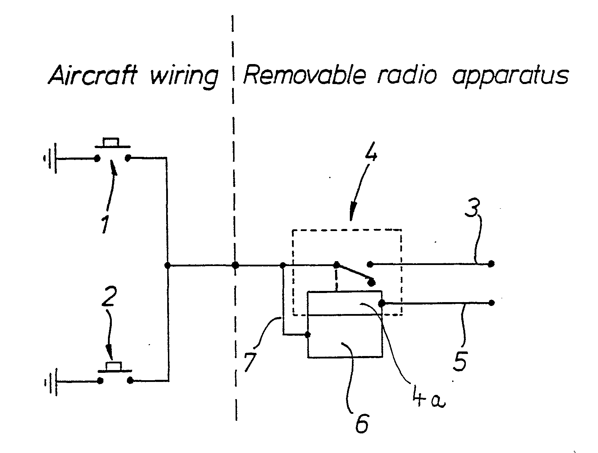

Reference is made to the drawing, which shows a circuit block diagram of part of an aircraft VHF radio apparatus in accordance with the invention. The transmission control means is shown as being operated to prevent operation of the transmitter. The transmitter circuit of the apparatus is caused to operate by the closure of one of two press-switches 1 and 2, respectively the captain's and co-pilot's "press-to-talk" keys, which causes grounding of a line 3 from the transmitter circuit. In the line 3, a switching device 4 is connected so as to be able to make or break the line 3 selectively. When the line 3 is broken, the "press-to-talk" keys 1 and 2 are prevented from operating the transmitter.

The switching device 4 includes a detector 4a connected through a line 5 to any convenient point in the "squelch" circuit of the receiver at which the voltage is increased in response to receipt of a radio signal of predetermined strength. The "squelch" circuit serves to suppress the amplification of signals below a predetermined level so that unwanted sound is not heard when the desired transmissions are not being received. The switching device 4 is thus arranged to operate when the "squelch" circuit allows a signal to pass to the amplifier, breaking the contact between the "press-to-talk" keys 1 and 2 and the transmitter circuit.

An over-ride device 6 is connected to the switching device 4, and has a connection 7 to the common line from the keys 1 and 2. The over-ride device 6 is arranged to detect two or, if desired, a greater number of operations of either of the keys 1 and 2 and to cause re-set of the switching device 4 to close the line 3 on the second or last operation of the key since the switching device 4 was activated to open the line 3. Thus, only if the "blocking" transmission from another transmitter continues will the second or final operation of the key serve to over-ride the switching device. If the transmission ends and re-starts after the first or penultimate operation of the key, further operations of the key will be necessary to over-ride the switching device 4. As an alternative, the over-ride device may be arranged to respond only to repeated operations of a key within a predetermined time interval.

While the switching device 4 is represented in the diagram as an electro-mechanical relay, it will be appreciated that the switching may readily be effected electronically. Electronic circuits will also be suitable for the over-ride device 6.

In aircraft radio, a "sidetone" is fed by the apparatus to the captain's and co-pilot's headsets during transmission so that they may hear their transmission. It will be seen that if the transmitter is prevented from operating, the received signal will continue to be heard when speaking into the transmitted microphone, immediately indicating that the switching device has operated.

Although the invention has been described with reference to VHF radios in aircraft ground/air and air/ground communications, it will be understood that the invention is applicable to other types of radio and to other uses than with aircraft.

## Claims

1. A simplex radio transmitting and receiving apparatus, comprising a selector switch (1, 2), operation of which causes the apparatus to change from a receiving mode into a transmitting mode, transmission blocking means (4) arranged to prevent selection of the transmitting mode if a signal of predetermined strength is being received by the apparatus at the time the selector switch is operated, and over-ride means (6) whereby operation of the transmission blocking means may be selectively over-ridden to enable the transmitting mode to be selected, characterised in that the over-ride means (6) is adapted to operate upon receipt of a control signal and to cease to operate when the receiving mode of the apparatus is again selected.

2. Apparatus according to Claim 1, characterised in that the control signal is generated by repeated operation of the selector switch (1, 2) within a predetermined time interval.

3. Apparatus according to Claim 1, characterised in that the control signal is generated by operation of a separate over-ride switch.

4. An apparatus according to Claim 1, 2 or 3, characterised in that the selector switch (1, 2) is a spring-biassed press-switch.

5. Transmission control means for a simplex radio transmitting and receiving apparatus comprising a selector switch (1, 2), operation of which causes the apparatus to change from a receiving mode into a transmitting mode, the control means comprising:

a switching means (4) connectable between the selector switch and the transmitter control circuit of the apparatus; and

a detector connectable to the receiver circuit of the apparatus and operably connected to the switching means, whereby, when the detector detects a received signal in the receiver circuit of a predetermined strength, the switching means is operated to open the circuit between the selector switch and the transmitter control circuit until the signal is no longer detected;

characterised in that the control means also includes an over-ride circuit (6) which comprises control signal detecting means, an over-ride control circuit, and mode-detecting means, the over-ride control circuit being activated by the control signal detecting means upon receipt of a control signal to over-ride operation of the switching means by the detector to close again the circuit between the selector-switch and the transmitter circuit, the mode-detecting means detecting the mode in which the apparatus is operating, and serving to de-activate the over-ride control circuit when a return to the receiving mode is detected.

## Patentansprüche

1. Für wechselsprechen geeigneter Funksende- und -empfangs-Apparat, mit einem Wahlschalter (1, 2), dessen Betätigung ein Umschalten des Apparates vom Empfangs- auf Sendebetrieb verursacht, mit einer Übertragungssperre (4), durch deren Auslegung die Wahl des Sendebetriebes blockiert werden kann, wenn ein Signal vorgegebener Stärke vom Apparat empfangen wird, während der Wahlschalter bedient wird, und mit einer Vorrang-Einrichtung (6), wodurch die Funktion der Sendesperre wahlweise überlagert werden kann, um den Sendebetrieb wählen zu können, dadurch gekennzeichnet, daß die Vorrang-Einrichtung (6) in der Lage ist, als Folge des Empfangs eines Steuersignals in Betrieb zu gehen, aber nicht mehr wirksam ist, sobald der Empfangsbetrieb des Apparates wieder gewählt wird.

2. Apparat nach Anspruch 1, dadurch gekennzeichnet, daß das Steuer-Signal durch wiederholte Bedienung des Wahlschalters (1, 2) innerhalb einer vorgegebenen Zeitspanne erzeugt wird.

3. Apparat nach Anspruch 1, dadurch gekennzeichnet, daß das Steuer-Signal durch Betätigen eines gesonderten Vorrang-Schalters ausgelöst wird.

4. Apparat nach Anspruch 1, 2 oder 3, dadurch gekennzeichnet, daß der Wahlschalter (1, 2) ein von einer Feder beaufschlagter Druckschalter ist.

5. Übertragungs-Steuereinrichtung zu einem für Wechselsprechen geeigneten Funksende- und -empfangs-Apparat, mit einem Wahlschalter (1, 2), dessen Bedienung den Apparat zu einem Wechsel von Empfangs- auf Sendebetrieb veranlasst, welche Steuereinrichtung umfaßt:

ein Schaltwerk (4), welches zwischen dem Wahlschalter und der Übertragungs-Steuereinrichtung des Apparates einschaltbar ist; und

einen Detektor, der an den Empfangsteil des Apparates anschließbar und betriebsmäßig mit dem Schaltwerk verbunden ist, wodurch, sofern der Detektor ein empfangenes Signal von vorgegebener Stärke im Empfangsteil feststellt, das Schaltwerk veranlaßt wird, die Koppelung zwischen dem Wahlschalter und der Sendeteil-Steuerung zu öffnen, bis das Signal nicht länger feststellbar ist;

dadurch gekennzeichnet, daß die Steuereinrichtung auch eine Vorrang-Einrichtung (6) aufweist, die aus einem Steuersignal-Detektor, einer Vorrang-Steueranlage und einem Betriebsart-Detektor besteht, daß die Vorrang-Steueranlage vom Steuersignal-Detektor aufgrund des Empfanges eines Steuersignales zum Vorrang-Betrieb des Schaltwerkes durch den Detektor und zum erneuten Schließen des Schaltkreises zwischen dem Schaltwerk und dem Übertrager-Teil aktiviert wird, und daß der Betriebsart-Detektor die jeweils betriebene Betriebsart ermittelt und dazu dient, die Vorrang-Steuereinrichtung zu deaktivieren, sobald ein Zurückkehren in den Empfangsbetrieb festgestellt wird.

## Revendications

1. Un appareil radio à émission et réception simplex, comportant un commutateur de sélection (1, 2), dont la commande provoque le passage de l'appareil d'un mode de réception à un mode d'émission, des moyens de blocage de l'émission (4) disposés pour empêcher la sélection du mode d'émission si un signal de puissance déterminé est reçu par l'appareil au moment où le commutateur de sélection est commandé, et un moyen (6) pour passer outre de telle sorte que la commande du moyen de blocage de l'émission puisse être sélectivement outrepassée pour mettre en oeuvre le mode d'émission à sélectionner, caractérisé en ce que le moyen (6) pour passer outre est adapté pour fonctionner après réception d'un signal de commande et pour cesser de fonctionner lorsque le mode de réception de l'appareil est à nouveau sélectionné.

2. Appareil selon la revendication 1, caractérisé en ce que le signal de commande est créé par l'opération répétée du commutateur de sélection (1, 2), dans un intervalle de temps prédéterminé.

3. Appareil selon la revendication 1, caractérisé en ce que le signal de commande est créé par l'opération d'un commutateur séparé.

4. Appareil selon l'une des revendications 1, 2 ou 3, caractérisé en ce que le commutateur de sélection (1, 2) est un commutateur soumis à l'action d'un ressort.

5. Dispositif de commande d'émission pour un appareil radio à émission et réception simplex, comprenant un commutateur de sélection (1, 2) dont la commande provoque le passage de l'appareil d'un mode de réception à un mode d'émission, ce dispositif de commande comprenant:

— un moyen de commutation (4) apte à être monté entre le commutateur de sélection et le circuit de commande d'émission de l'appareil;

— un détecteur apte à être relié au circuit de réception de l'appareil et relié en opération au moyen de commutation de telle sorte que, lorsque le détecteur détecte un signal de réception dans le circuit de réception d'une puissance prédéterminée, le moyen de commutation soit mis en oeuvre pour ouvrir le circuit entre le commutateur de sélection et le circuit de commande de l'émission jusqu'à ce que ce signal ne soit plus détecté,

caractérisé en ce que le dispositif de commande comporte également un circuit (6) pour passer outre qui contient des moyens de détection du signal de commande, et un moyen de détection de mode, le circuit pour passer outre étant activé par le moyen de détection du signal de commande après réception d'un signal de commande de passer outre pour la mise en oeuvre du moyen de commutation par le détecteur afin de fermer à nouveau le circuit entre le commutateur de sélection et le circuit d'émission, le moyen de détection de mode détectant le mode dans lequel fonctionne l'appareil et servant à désactiver le circuit de commande pour passer outre quand un retour sur le mode de réception est détecté.

Aircraft wiring | Removable radio apparatus